(19) **Europäisches Patentamt**
**European Patent Office**
**Office européen des brevets**

(11) **EP 1 548 971 B1**

(12) **EUROPEAN PATENT SPECIFICATION**

(45) Date of publication and mention
of the grant of the patent:
**23.08.2017 Bulletin 2017/34**

(51) Int Cl.:
*H04L 1/06* [(2006.01)]  *H04L 27/34* [(2006.01)]

(21) Application number: **04030711.8**

(22) Date of filing: **23.12.2004**

(54) **Constellation-rotating orthogonal space-time block coding technique**

Signalraumrotierende orthogonale Raum-Zeit-Blockkodierungstechnik

Technique de codage espace-temps orthogonal par blocs avec rotation de la constellation

(84) Designated Contracting States:
**DE FI FR GB IT SE**

(30) Priority: **24.12.2003 KR 2003096818**

(43) Date of publication of application:
**29.06.2005 Bulletin 2005/26**

(73) Proprietors:
• **Samsung Electronics Co., Ltd.**
**Suwon-si, Gyeonggi-do, 443-742 (KR)**
• **Seoul National University Industry Foundation**
**Seoul (KR)**

(72) Inventors:
• **Cheun, Kyung-Whoon**
**Gangnam-gu**
**Seoul (KR)**
• **Jung, Tae-Jin**
**Yuseong-gu**
**Daejeon (KR)**
• **Chung, Jae-Hak**
**c/o Samsung Electronics Co., Ltd.**
**Suwon-si**
**Gyeonggi-do (KR)**

(74) Representative: **Grünecker Patent- und**
**Rechtsanwälte**
**PartG mbB**
**Leopoldstraße 4**
**80802 München (DE)**

(56) References cited:
**WO-A-01/63826**    **WO-A-03/056742**
**US-A1- 2003 073 464**    **US-A1- 2003 174 782**

• **ZHIQIANG LIU ET AL: "Space-time-frequency block coded OFDM with subcarrier grouping and constellation precoding" 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002; [IEEE INTERNATIONAL CONFERENCE ON ACOUSTICS, SPEECH, AND SIGNAL PROCESSING (ICASSP)], NEW YORK, NY : IEEE, US, vol. 3, 13 May 2002 (2002-05-13), pages III-2205, XP010803838 ISBN: 978-0-7803-7402-7**
• **LEI SHAO ET AL: "Rate-one Space Frequency Block Codes with Maximum Diversity Gain for MIMO-OFDM" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 2, 1 December 2003 (2003-12-01), pages 809-813, XP010678177 ISBN: 978-0-7803-7974-9**
• **LE NIR V ET AL: "Reduced-complexity space-time block coding and decoding schemes with block linear precoding" ELECTRONICS LETTERS, IEE STEVENAGE, GB, vol. 39, no. 14, 10 July 2003 (2003-07-10), pages 1066-1068, XP006020635 ISSN: 0013-5194**
• **NIR LE V ET AL: "SPACE-TIME BLOCK CODES WITH MAXIMAL DIVERSITY IN OFDM-BASED SYSTEMS" WORLD WIRELESS CONGRESS, XX, XX, 25 May 2004 (2004-05-25), pages 518-523, XP008042067**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **HESHAM EL GAMAL ET AL: "Universal Space-Time Coding" IEEE TRANSACTIONS ON INFORMATION THEORY, IEEE, US, vol. 49, no. 5, 1 May 2003 (2003-05-01), pages 1097-1119, XP011074756 ISSN: 0018-9448**
- **OLAV TIRKKONEN ET AL: "Square-Matrix Embeddable Space-Time Block Codes for Complex Signal Constellations" IEEE TRANSACTIONS ON INFORMATION THEORY, IEEE, US, vol. 48, no. 2, 1 February 2002 (2002-02-01), XP011028148 ISSN: 0018-9448**
- **LANEMAN J N ET AL: "Distributed space-time-coded protocols for exploiting cooperative diversity in wireless networks" IEEE TRANSACTIONS ON INFORMATION THEORY, IEEE, US, vol. 49, no. 10, 1 October 2003 (2003-10-01), pages 2415-2425, XP011102231 ISSN: 0018-9448**

**Description**

**BACKGROUND OF THE INVENTION**

1. Field of the Invention

The present invention relates generally to a wireless communication system, and in particular, to a coding technique with maximum diversity gain in a multiple antenna transmission system.

2. Description of the Related Art

As a way to improve the performance of mobile communication systems under a fading channel environment, many studies have been conducted on transmit antenna diversity with which data is transmitted through multiple antennas. Transmit antenna diversity, which provides diversity gain using a plurality of transmit antennas, is suitable for future-generation high-speed data communication. To achieve the transmit antenna diversity gain, various channel coding techniques have been proposed.

Zhiqiang Liu et al., in a paper entitled "Space-time-frequency block coded OFDM with subcarrier grouping and constellation precoding", 2002 IEEE International Conference on Acoustics, Speech, and Signal Processing, IEEE, US, vol. 3, 13 May 2002, pages III - 2205 - III - 2208, describe a space-time frequency block coded OFDM for a wireless communication system with transmit antennas and receive antennas. The STF coding is based on STF code words represented by block matrices as it is described in Section 2.2. Moreover, the encoding process comprises employment of a square constellation precoder, Alamouti's ST coding and constellation precoding in order to design the square constellation precoder based on a product distance criterion used for solving for a maximization problem.

Lei Shao et al., in a paper entitled "Rate-one Space Frequency Block Codes with Maximum Diversity Gain for MIMO-OFDM", Globecom' 03, 2003, IEEE Global Telecommunications Conference, IEEE,US, vol. 2, 1 December 2003, pages 809 - 813, describe a rate-1 space frequency code for an OFDM system with transmit and receive antennas.

Orthogonal space-time block codes (STBCs) that are based on an orthogonal design theory is one example of a technique of achieving optimum transmit antenna diversity gain. The orthogonal STBCs advantageously have a maximum diversity order and enable maximum likelihood (ML) decoding through simple linear processing on a receiver side.

However, the orthogonal STBCs, without using additional frequency bands, exist for an arbitrary number of antennas for pulse amplitude modulation (PAM), and exist only for two transmit antennas for quadrature amplitude modulation (QAM).

Aside from the orthogonal STBCs, a new full rate diversity structure has been proposed that provides maximum diversity gain in QAM, under a Raleigh fading channel environment. This diversity structure achieves spatial diversity gain by rotating the constellation of QAM modulation symbols through a constellation-rotating pre-coder and interleaving the resulting symbols. A full rate space-time constellation-rotating code was proposed by modifying the diversity structure. Signals from the constellation-rotating pre-coder are transmitted through a plurality of transmit antennas for different symbol periods such that they separately experience fading.

However, the full rate space-time constellation-rotating codes are not orthogonal and increase ML detection complexity for detecting the space-time constellation-rotating codes exponentially in proportion to the number of transmit antennas and the size of the symbol constellation.

**SUMMARY OF THE INVENTION**

Therefore, the present invention has been designed to substantially solve at least the above problems and/or disadvantages and to provide at least the advantages below. Accordingly, an object of the present invention is to provide a space-time block coding apparatus and method for achieving maximum diversity gain by directly concatenating a constellation-rotating precoder to an orthogonal space-time block coder when a QAM is utilized and two or more transmit antennas are used.

Another object of the present invention is to provide a space-time block coding apparatus and method for achieving maximum coding gain by using Alamouti's orthogonal space-time block code.

A further object of the present invention is to provide a space-time block coding apparatus and method for enabling code detection without rapidly increasing ML complexity, while achieving maximum coding gain.

The above and other objects are achieved by providing a transmitter according to claim 1 and a coding method according to claim 7.

In the space-time block coding apparatus, a constellation-rotating precoder generates P $m^{th}$-order sub-rotated vectors $\vec{r}_i$ by constellation-rotating an $L^{th}$-order input vector $\vec{x}$ including a plurality of input symbols modulated in at least one modulation scheme, an accumulator generates m $p^{th}$-order sub-vectors $\vec{u}_i$ using the sub-rotated vectors $\vec{r}_i$, and a space-time block coder generates codeword matrices $\mathbf{A}_i(\vec{u}_i)$ by performing orthogonal space-time block coding on the sub-vectors $\vec{u}_i$.

The constellation-rotating precoder includes a first accumulation module for generating P $m^{th}$-order sub-input vectors $\vec{x}_i$ by grouping the symbols of the input vector $\vec{x}$ into P groups each having m symbols, and outputting the P $m^{th}$-order sub-input vectors $\vec{x}_i$ in parallel, and a plurality of constellation rotators for generating the P $m^{th}$-order sub-rotated vectors $\vec{r}_i$ by multiplying the parallel P $m^{th}$-order sub-input vectors $\vec{x}_i$ by a constellation-rotating matrix 0.

The accumulator includes a plurality of extraction modules for extracting signals $r_{i,j}$ included in each of the sub-rotated vectors $\bar{r}_i$ received from the constellation-rotating precoder, and a second accumulation module for generating the m $p^{th}$-order sub-vectors $\bar{u}_i$ by grouping the extracted signals $r_{i,j}$.

The space-time block coder includes a plurality of orthogonal space-time coder modules for generating the codeword matrices $\mathbf{A}_i(\vec{u}_i)$ by performing orthogonal space-time block coding on the sub-vectors $\vec{u}_i$ received from the accumulator, and a mapper for mapping the codeword matrices $\mathbf{A}_i(\vec{u}_i)$ to the plurality of the transmit antennas.

The space-time block coder transmits the columns of each of the codeword matrices $\mathbf{A}_i(\vec{u}_i)$ through different transmit antennas for the same symbol period, and transmits the columns of different codeword matrices $\mathbf{A}_i(\vec{u}_i)$ through different transmit antennas for different symbol periods.

In the space-time block coding method, P $m^{th}$-order sub-rotated vectors $\vec{r}_i$ are generated by constellation-rotating an $L^{th}$-order input vector $\vec{x}$ including a plurality of input symbols modulated in at least one modulation scheme (step 1), m $p^{th}$-order sub-vectors $\vec{u}_i$ are generated using the sub-rotated vectors $\vec{r}_i$ (step 2), and codeword matrices $\mathbf{A}_i(\vec{u}_i)$ are generated by performing orthogonal space-time block coding on the sub-vectors $\vec{u}_i$ (step 3).

In step 1, P $m^{th}$-order sub-input vectors $\vec{x}_i$ are generated by grouping the symbols of the input vector $\vec{x}$ into P groups each having m symbols, and outputting the P $m^{th}$-order sub-input vectors $\vec{x}_i$ in parallel. The P $m^{th}$-order sub-rotated vectors $\vec{r}_i$ are generated by multiplying the parallel P $m^{th}$-order sub-input vectors $\vec{x}_i$ by a constellation-rotating matrix 0.

In step 2, signals $r_{i,j}$ included in each of the sub-rotated vectors $\vec{r}_i$ are extracted. The m $p^{th}$-order sub-vectors $\vec{u}_i$ are generated by grouping the extracted signals $r_{i,j}$. In step 3, the codeword matrices $\mathbf{A}_i(\vec{u}_i)$ are generated by performing orthogonal space-time block coding on the sub-vectors $\vec{u}_i$ and mapped to the plurality of the transmit antennas.

The columns of each of the codeword matrices $\mathbf{A}_i(\vec{u}_i)$ are transmitted through different transmit antennas for the same symbol period, and the columns of different codeword matrices $\mathbf{A}_i(\vec{u}_i)$ are transmitted through different transmit antennas for different symbol periods.

A TxN codeword matrix $\mathbf{C}(\vec{x})$ is formed using the codeword matrices $\mathbf{A}_i(\vec{u}_i)$, to be transmitted for N transmit antennas for T symbol periods.

The TxN codeword matrix $\mathbf{C}(\vec{x})$ is formed to be

$$\mathbf{C}(\vec{x}) \overset{\Delta}{=} [\vec{c}_1, \cdots, \vec{c}_N]$$

$$= \begin{bmatrix} \mathbf{A}_1(\vec{u}_1) & \mathbf{0}_{n \times T_0} & \cdots & \mathbf{0}_{n \times T_0} \\ \mathbf{0}_{n \times T_0} & \mathbf{A}_2(\vec{u}_2) & \cdots & \mathbf{0}_{n \times T_0} \\ \vdots & \vdots & \ddots & \vdots \\ \mathbf{0}_{n \times T_0} & \mathbf{0}_{n \times T_0} & \cdots & \mathbf{A}_m(\vec{u}_m) \end{bmatrix}$$

where $\mathbf{0}_{n \times T_0}$ denotes an $n \times T_0$ zero matrix and $\vec{c}_i$ denotes an $i^{th}$ column of $\mathbf{C}(\vec{x})$.

A modified TxN codeword matrix $\mathbf{C}(\vec{x})' \overset{\Delta}{=} \mathbf{U}\mathbf{C}(\vec{x})\mathbf{V}$ is formed by multiplying the codeword matrix $\mathbf{C}(\vec{x})$ by a TxT unitary matrix U and an NxN unitary matrix V at the left and right of $\mathbf{C}(\vec{x})$ and transmitted through the N transmit antennas for the T symbol periods.

N=$2^n$, Alamouti's code is used for the orthogonal space-time block coding, and for the constellation rotation, the following matrix is used:

$$\Theta = \frac{1}{\sqrt{N}} \begin{bmatrix} 1 & \alpha_0 & \cdots & \alpha_0^{N-1} \\ 1 & \alpha_1 & \cdots & \alpha_1^{N-1} \\ \vdots & \vdots & \ddots & \vdots \\ 1 & \alpha_{N-1} & \cdots & \alpha_{N-1}^{N-1} \end{bmatrix}$$

The unitary matrices U and V are respectively

$$\mathbf{U} = \begin{bmatrix} \mathbf{I}_2 & \mathbf{I}_2 & \mathbf{I}_2 & \cdots & \mathbf{I}_2 \\ \mathbf{I}_2 & \theta & \theta^2 & \cdots & \theta^{N-1} \\ \mathbf{I}_2 & \theta^2 & \theta^4 & \cdots & \theta^{(N-1)2} \\ \vdots & \vdots & \vdots & \ddots & \vdots \\ \mathbf{I}_2 & \theta^{N-1} & \theta^{2(N-1)} & \cdots & \theta^{(N-1)^2} \end{bmatrix}^*$$

and

$$\mathbf{V} = \begin{bmatrix} \mathbf{I}_2 & \mathbf{I}_2 & \mathbf{I}_2 & \cdots & \mathbf{I}_2 \\ \mathbf{I}_2 & \theta & \theta^2 & \cdots & \theta^{N-1} \\ \mathbf{I}_2 & \theta^2 & \theta^4 & \cdots & \theta^{(N-1)2} \\ \vdots & \vdots & \vdots & \ddots & \vdots \\ \mathbf{I}_2 & \theta^{N-1} & \theta^{2(N-1)} & \cdots & \theta^{(N-1)^2} \end{bmatrix}$$

where $I_2$ is a 2x2 unitary matrix and $\theta \overset{\Delta}{=} \begin{bmatrix} e^{i4\pi/N} & 0 \\ 0 & e^{-i4\pi/N} \end{bmatrix}$.

The codeword matrix $\mathbf{C(\vec{x})'} \overset{\Delta}{=} \mathbf{UC(\vec{x})V}$ is formed to be

$$\mathbf{C(\vec{x})'} = \mathbf{U} \begin{bmatrix} \mathbf{C}_{Ala}(r_1, r_{N/2+1}) & \mathbf{0}_2 & \cdots & \mathbf{0}_2 \\ \mathbf{0}_2 & \mathbf{C}_{Ala}(r_1, r_{N/2+2}) & \cdots & \mathbf{0}_2 \\ \vdots & \vdots & \ddots & \vdots \\ \mathbf{0}_2 & \mathbf{0}_2 & \cdots & \mathbf{C}_{Ala}(r_{N/2}, r_N) \end{bmatrix} \mathbf{V}$$

$$= \begin{bmatrix} \mathbf{C}_{Ala}(s_1, s_{N/2+1}) & \mathbf{C}_{Ala}(s_{N/2}, s_N) & \cdots & \mathbf{C}_{Ala}(s_2, s_{N/2+2}) \\ \mathbf{C}_{Ala}(s_2, s_{N/2+2}) & \mathbf{C}_{Ala}(s_1, s_{N/2+1}) & \cdots & \mathbf{C}_{Ala}(s_3, s_{N/2+3}) \\ \vdots & \vdots & \ddots & \vdots \\ \mathbf{C}_{Ala}(s_{N/2}, s_N) & \mathbf{C}_{Ala}(s_{N/2-1}, s_{N-1}) & \cdots & \mathbf{C}_{Ala}(s_1, s_{N/2+1}) \end{bmatrix}$$

where $\mathbf{C}_{Ala}(a,b) \overset{\Delta}{=} \begin{bmatrix} a & b \\ -b^* & a^* \end{bmatrix}$, $s_l = e^{i(l-1)\pi/N} x_l$, and $s_{N/2+l} = e^{i(l-1)\pi/N} x_{N/2+l}$ ($l=1, \cdots, N/2$).

If the number of the transmit antennas is (N-1) and an odd number, a new (N-1)xT codeword matrix is generated by deleting the last of the N rows of the NxT codeword matrix and transmitted through the (N-1) transmit antennas for the T symbol periods.

In step 3, a total of m codeword matrices $\mathbf{A}_i(\vec{u}_i)$ (m=axb, a, b≥1) are grouped into b codeword matrix groups each having a codeword matrices, the b codeword matrix groups are transmitted after interleaving or using different sub-carriers, and a codeword matrices in each codeword matrix group are transmitted through $n \times a(\leq N)$ transmit antennas for $T_0 \times a(\leq T)$ symbol periods.

In step 3, other $T_0 \times n$ codeword matrices $\mathbf{B}_i(\cdot)$, $\mathbf{C}_i(\cdot)$, and $\mathbf{D}_i(\cdot)$ generated independently of a total of m $T_0$xn codeword matrices $\mathbf{A}_i(\cdot)$ are transmitted in a manner expressed as

$$\begin{bmatrix} \mathbf{A}_1(\cdot) & \mathbf{B}_1(\cdot) & \cdots & \mathbf{C}_1(\cdot) & \mathbf{D}_1(\cdot) & \cdots & \mathbf{0}_m & \mathbf{0}_m \\ \mathbf{0}_m & \mathbf{A}_2(\cdot) & \mathbf{B}_2(\cdot) & \cdots & \mathbf{C}_2(\cdot) & \mathbf{D}_2(\cdot) & \cdots & \mathbf{0}_m \\ \vdots & \vdots & \ddots & \ddots & \ddots & \ddots & \ddots & \vdots \\ \mathbf{0}_m & \mathbf{0}_m & \cdots & \mathbf{A}_m(\cdot) & \mathbf{B}_m(\cdot) & \cdots & \mathbf{C}_m(\cdot) & \mathbf{D}_m(\cdot) \end{bmatrix}^T,$$

$$\begin{bmatrix} \mathbf{A}_1(\cdot) & \mathbf{B}_1(\cdot) & \cdots & \mathbf{C}_1(\cdot) & \mathbf{D}_1(\cdot) \\ \mathbf{D}_2(\cdot) & \mathbf{A}_2(\cdot) & \mathbf{B}_2(\cdot) & \cdots & \mathbf{C}_2(\cdot) \\ \ddots & \ddots & \ddots & \ddots & \ddots \\ \cdots & \mathbf{C}_m(\cdot) & \mathbf{D}_m(\cdot) & \mathbf{A}_m(\cdot) & \mathbf{B}_m(\cdot) \end{bmatrix}^T,$$

$$\begin{bmatrix} \mathbf{A}_1(\cdot) & \mathbf{B}_1(\cdot) & \cdots & \mathbf{C}_1(\cdot) & \mathbf{D}_1(\cdot) & \cdots \\ \mathbf{A}_2(\cdot) & \mathbf{B}_2(\cdot) & \cdots & \mathbf{C}_2(\cdot) & \mathbf{D}_2(\cdot) & \cdots \\ \vdots & \vdots & \cdots & \vdots & \vdots & \cdots \\ \mathbf{A}_m(\cdot) & \mathbf{B}_m(\cdot) & \cdots & \mathbf{C}_m(\cdot) & \mathbf{D}_m(\cdot) & \cdots \end{bmatrix}^T$$

$$\begin{bmatrix} \mathbf{A}_1(\cdot) & \mathbf{A}_2(\cdot) & \cdots & \mathbf{A}_m(\cdot) \\ \mathbf{B}_1(\cdot) & \mathbf{B}_2(\cdot) & \cdots & \mathbf{B}_m(\cdot) \\ \vdots & \vdots & \vdots & \vdots \\ \mathbf{C}_1(\cdot) & \mathbf{C}_2(\cdot) & \cdots & \mathbf{C}_m(\cdot) \\ \mathbf{D}_1(\cdot) & \mathbf{D}_2(\cdot) & \cdots & \mathbf{D}_m(\cdot) \end{bmatrix}^T$$

## BRIEF DESCRIPTION OF THE DRAWINGS

The above and other objects, features, and advantages of the present invention will become more apparent from the following detailed description when taken in conjunction with the accompanying drawings in which:

FIG. 1 is a schematic block diagram illustrating a coding apparatus according to a preferred embodiment of the present invention;
FIG. 2 is a detailed block diagram illustrating a constellation-rotating precoder as illustrated in FIG. 1;
FIG. 3 is a detailed view illustrating a constellation accumulator as illustrated in FIG. 1; and
FIG. 4 is a detailed block diagram illustrating a space-time block coder as illustrated in FIG. 1.

## DETAILED DESCRIPTION OF THE PREFERRED EMBODIMENT

Preferred embodiments of the present invention will be described in detail herein below with reference to the accompanying drawings. In the following description, well-known functions or constructions are not described in detail because they would obscure the invention in unnecessary detail.

A space-time block coding technique according to the present invention will be described in the context of a wireless communication system using N (an even number, N=mxn, m≥1, n≥2)) transmit antennas and M receiver antennas.

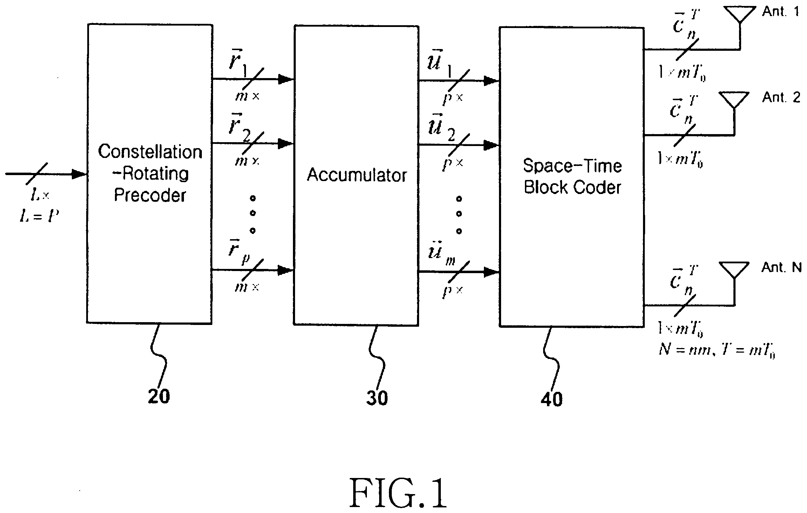

FIG. 1 is a schematic block diagram illustrating a coding apparatus according to a preferred embodiment of the present invention. Referring to FIG. 1, the space-time block coding apparatus includes a constellation-rotating precoder 20 for precoding an input signal vector and outputting $m^{th}$-order sub-rotated vectors, an accumulator 30 for generating $p^{th}$-order sub-vectors for the input of the sub-rotated vectors, and a space-time block coder 40 for generating a total of m codeword matrices by space-time coding the sub-vectors, and mapping the codeword matrices to a plurality of antennas.

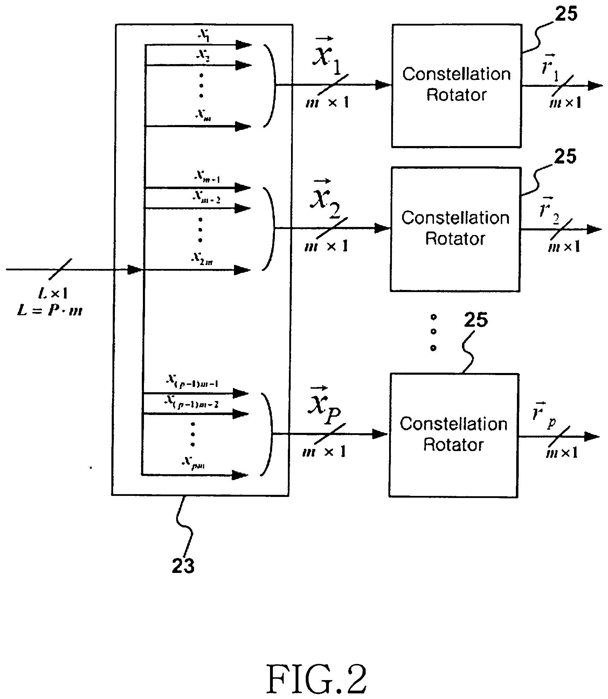

FIG. 2 is a detailed block diagram illustrating the constellation-rotating precoder 20. Referring to FIG. 2, in the constellation-rotating precoder 20, for the input of an $L^{th}$-order vector $\vec{\mathbf{x}} = [x_1, \cdots, x_L]^T$ including $L(=m \times p \leq N, p \geq 2)$ QAM-modulated signals with Q constellation sizes, an accumulation module 23 generates a total of P $m^{th}$-order sub-input vectors $\vec{\mathbf{x}}_i$ $(i=1,\cdots,p)$ by grouping the L symbols $x_i$ of the input vector, each group having m symbols. Constellation rotators 25 generates a total of P $m^{th}$-order sub-rotated vectors $\vec{\mathbf{r}}_i = [r_{i,1}, \cdots, r_{i,m}]$ $(i=1,\cdots,p)$ by multiplying $\vec{\mathbf{x}}_i$ by an mxm constellation-rotating matrix $\Theta$ as follows in Equation (1):

$$\begin{bmatrix} \vec{\mathbf{r}}_1 \\ \vec{\mathbf{r}}_2 \\ \vdots \\ \vec{\mathbf{r}}_p \end{bmatrix} = \begin{bmatrix} \Theta & 0_m & \cdots & 0_m \\ 0_m & \Theta & \cdots & 0_m \\ \vdots & \vdots & \ddots & \vdots \\ 0_m & 0_m & \cdots & \Theta \end{bmatrix} \begin{bmatrix} \vec{\mathbf{x}}_1 \\ \vec{\mathbf{x}}_2 \\ \vdots \\ \vec{\mathbf{x}}_p \end{bmatrix}$$

$$\ldots\ldots(1)$$

where $0_m$ denotes an mxm zero matrix.

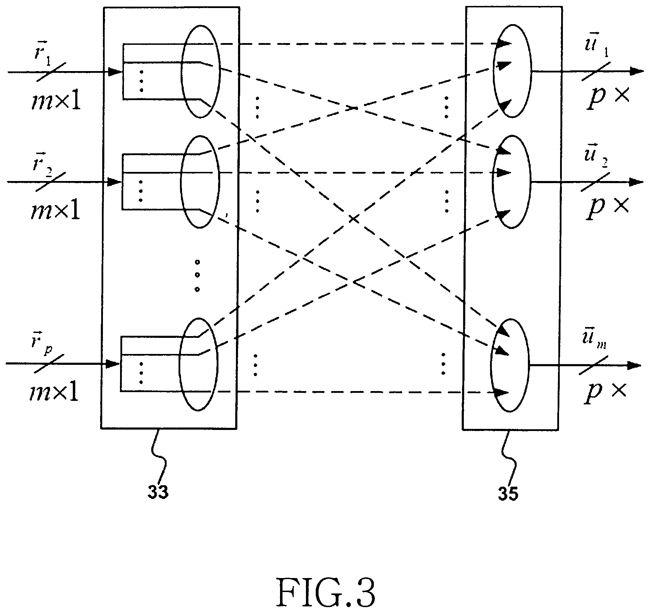

FIG. 3 is a detailed block diagram illustrating the accumulator 30. For the input of the P $m^{th}$-order sub-rotated vectors $\vec{\mathbf{r}}_i$, the accumulator 30 generates a total of m $p^{th}$-order sub-vectors $\vec{\mathbf{u}}_i$ $(i=1,\cdots m)$ by extracting and grouping the individual signals $r_{i,j}$ of each sub-signal vector $\vec{\mathbf{r}}_i$, each group having P signals $r_{i,j}$, $j=1,\cdots p$.

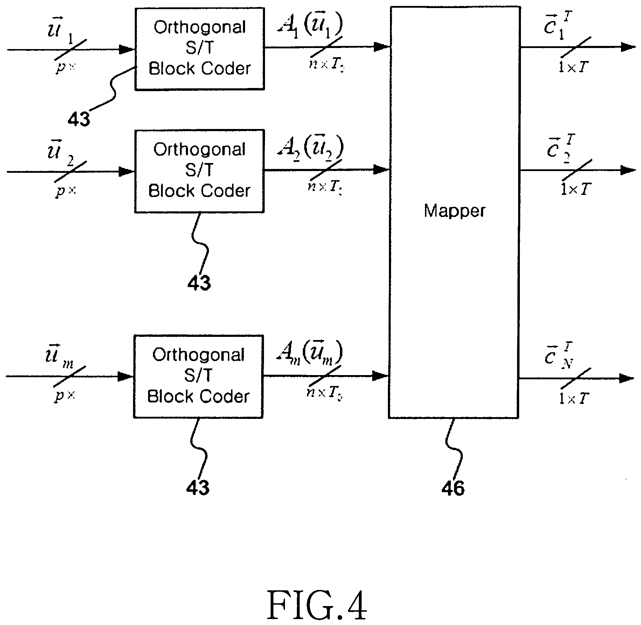

FIG. 4 is a detailed block diagram illustrating the space-time block coder 40. Referring to FIG. 4, orthogonal space-time block coders 43 encode the m $p^{th}$-order sub-vectors $\vec{\mathbf{u}}_i$ received from the accumulator 30 illustrated in FIG. 3 with respect to $T_0$ symbol periods and n transmit antennas, and generate a total of m $n \times T_0$ codeword matrices, $\mathbf{A}_i(\vec{\mathbf{u}}_i)(i=1,\cdots,m)$. A mapper 46 maps the m $n \times T_0$ codeword matrices such that the n columns of each codeword matrix $\mathbf{A}_i(\vec{\mathbf{u}}_i)$ are transmitted through n different antennas for each same symbol period of the $T_0$ symbol periods and columns in different codeword matrices $\mathbf{A}_i(\vec{\mathbf{u}}_i)$ are transmitted through n different antennas for the $T_0$ different symbol periods.

As an example of the above transmission scheme, a TxN codeword matrix $\mathbf{C}(\vec{\mathbf{x}}) = \{c_{ti}\}$ ($c_{ti}$ is a signal transmitted through an $i^{th}$ transmit antenna at time t) is represented as shown in Equation (2),

$$\mathbf{C}(\vec{\mathbf{x}}) \overset{\Delta}{=} [\vec{\mathbf{c}}_1, \cdots, \vec{\mathbf{c}}_N]$$

$$= \begin{bmatrix} \mathbf{A}_1(\vec{\mathbf{u}}_1) & 0_{n \times T_0} & \cdots & 0_{n \times T_0} \\ 0_{n \times T_0} & \mathbf{A}_2(\vec{\mathbf{u}}_2) & \cdots & 0_{n \times T_0} \\ \vdots & \vdots & \ddots & \vdots \\ 0_{n \times T_0} & 0_{n \times T_0} & \cdots & \mathbf{A}_m(\vec{\mathbf{u}}_m) \end{bmatrix}$$

$$\ldots\ldots(2)$$

where $0_{n \times T_0}$ denotes an $n \times T_0$ zero matrix and $\vec{\mathbf{c}}_i$ denotes an ith column of $\mathbf{C}(\vec{\mathbf{x}})$.

Assuming that signals transmitted from the N transmit antennas independently experience Raleigh fading and each channel value is unchanged for T symbol periods in which the codeword matrix $\mathbf{C}(\vec{\mathbf{x}})$ is transmitted, the output $y_{tj}$ of a matched filter for a signal received at a $j^{th}$ receive antenna at time t is shown in Equation (3),

$$y_{tj} = \sqrt{E_s} \sum_{i=1}^{N} h_{ij} c_{ti} + z_{tj}, \quad t = 1,\cdots,T, \quad j = 1,\cdots,M$$

$$\ldots\ldots(3)$$

where $E_s$ denotes an average symbol energy of signals received at a receiver and $h_{ij}$ denotes a channel fading value from an $i^{th}$ transmit antenna to a $j^{th}$ receive antenna, having an independent, identically distributed (i.i.d.) Gaussian distribution with a zero mean and a 0.5 variance for real and imaginary number parts. $z_{tj}$ is an AWGN (Additive White Gaussian Noise) sample value of the $j^{th}$ receive antenna at time t, having a two-sided power spectral density of $N_0/2$ for real and imaginary number parts each.

Accordingly, a TxM received matrix Y = {$y_{tj}$} with signals received at M receive antennas for T symbol periods is expressed as shown in Equation (4),

$$\mathbf{Y} = \mathbf{C}(\vec{\mathbf{x}})\mathbf{H} + \mathbf{N}$$

$$\ldots\ldots(4)$$

where $\mathbf{H}$ = {$h_{ij}$} and $\mathbf{Z}$ = {$z_{tj}$}. H and Z are an NxM channel matrix and a TxM noise matrix, respectively.

ML decoding is performed by selecting an input vector $\hat{\mathbf{x}}$ as shown in Equation (5), assuming that the channel matrix H is included in the receiver.

$$\hat{\mathbf{x}} = \min_{\vec{\mathbf{x}}} \| \mathbf{Y} - \mathbf{C}(\vec{\mathbf{x}})\mathbf{H} \|$$

$$\ldots\ldots(5)$$

In Equation (5), $\|\bullet\|$ is a Frobenius norm.

When the above ML decoding method is used, the pairwise error probability (PEP) of generating decoding errors by a different codeword matrix $\mathbf{C}(\vec{\mathbf{x}}')$ with respect to the actual transmitted codeword matrix $\mathbf{C}(\vec{\mathbf{x}})$ is derived at a high signal-to-noise ratio (SNR) as in Equation (6),

$$\Pr(\mathbf{C}(\vec{\mathbf{x}}) \rightarrow \mathbf{C}(\vec{\mathbf{x}}')) \leq \left( \prod_{i=1}^{r} \lambda_i \right)^{-M} \left( \frac{E_s}{4N_0} \right)^{-rM}$$

$$\ldots\ldots(6)$$

where $r$ and $\lambda_i$ ($i=1\cdots,r$) are the rank and non-zero eigenvalue of an NxN matrix $\mathbf{S}(\vec{\mathbf{x}}, \vec{\mathbf{x}}') \overset{\Delta}{=} \mathbf{C}(\vec{\mathbf{x}} - \vec{\mathbf{x}}')^* \mathbf{C}(\vec{\mathbf{x}} - \vec{\mathbf{x}}') = (\mathbf{C}(\vec{\mathbf{x}}) - \mathbf{C}(\vec{\mathbf{x}}'))^* (\mathbf{C}(\vec{\mathbf{x}}) - \mathbf{C}(\vec{\mathbf{x}}'))$, respectively.

Further, the variable $r$, which ranges up to N, determines a diversity gain. $\prod_{i=1}^{r} \lambda_i$ in Equation (6) is a coding gain. If the codeword matrix has a maximum diversity gain, $\prod_{i=1}^{r} \lambda_i$ is equal to the determinant of $\mathbf{S}(\vec{\mathbf{x}},\vec{\mathbf{x}}')$.

The constellation-rotating matrix $\Theta$ of Equation (7), which is used in the constellation rotators 25 is designed such that all entry pairs in a new rotated vector pair $(\vec{\mathbf{r}}_i, \vec{\mathbf{r}}_i')$ for a pair of different sub-input vectors $(\vec{\mathbf{x}}_i, \vec{\mathbf{x}}_i')$ have different values $r_{i,j} \neq r_{i,j}'$, $\forall j$, especially in QAM.

$$\Theta = \frac{1}{\sqrt{N}}\begin{bmatrix} 1 & \alpha_0 & \cdots & \alpha_0^{N-1} \\ 1 & \alpha_1 & \cdots & \alpha_1^{N-1} \\ \vdots & \vdots & \ddots & \vdots \\ 1 & \alpha_{N-1} & \cdots & \alpha_{N-1}^{N-1} \end{bmatrix}$$

$$\ldots\ldots(7)$$

In Equation (7), $\alpha_i=\exp(j2\pi(i+1/4)/N)$ and $i=0,1,\cdots,N\text{-}1$. If the codeword matrix of Equation (2) according to the present invention is transmitted, the determinant of a matrix $\mathbf{A}(\vec{\mathbf{x}},\vec{\mathbf{x}}')$ for a pair of different input vectors $(\vec{\mathbf{x}},\vec{\mathbf{x}}')$ is always greater than 0 because the property of the constellation-rotating matrix $\Theta$ (i.e., $r_{i,j} \neq r_{i,j}'$, $\forall j$). Accordingly, the code of Equation (2) has a maximum diversity order of N for each receive antenna, as shown in Equation (8).

$$\det(\mathbf{S}(\vec{\mathbf{x}},\vec{\mathbf{x}}')) = \prod_{i=1}^{m}\left(\sum_{l=1}^{p}\left|r_{l,i} - r_{l,i}'\right|^2\right)^n > 0$$

$$\ldots\ldots(8)$$

In Equation (8), $r_{l,i}$ and $r_{l,i}'$ are $i^{th}$ entries of $\vec{\mathbf{r}}_l$ and $\vec{\mathbf{r}}_l'$, respectively and $\vec{\mathbf{r}}_l$ and $\vec{\mathbf{r}}_l'$ are the respective sub-rotated vectors of $\vec{\mathbf{x}}_l$ and $\vec{\mathbf{x}}_l'$.

By multiplying arbitrary NxN unitary matrices U and V, the proposed codeword matrix by the proposed codeword matrix $\mathbf{C}(\vec{\mathbf{x}})$ at its left and right, $\mathbf{C}(\vec{\mathbf{x}})$ is changed as in Equation (9).

$$\mathbf{C}(\vec{\mathbf{x}})' \overset{\Delta}{=} \mathbf{U}\mathbf{C}(\vec{\mathbf{x}})\mathbf{V}$$

$$\ldots\ldots(9)$$

The coding gain of the new codeword matrix $\mathbf{C}(\vec{\mathbf{x}})'$ for $(\vec{\mathbf{x}}, \vec{\mathbf{x}})$ is equal to that of the old codeword matrix $\mathbf{C}(\vec{\mathbf{x}})$, as easily noted from Equation (10).

$$\det(\mathbf{C}(\vec{\mathbf{x}} - \vec{\mathbf{x}}')'^*\mathbf{C}(\vec{\mathbf{x}} - \vec{\mathbf{x}}')') = \det(\mathbf{V}^*\mathbf{C}(\vec{\mathbf{x}} - \vec{\mathbf{x}}')^*\mathbf{U}^*\mathbf{U}\mathbf{C}(\vec{\mathbf{x}} - \vec{\mathbf{x}}')\mathbf{V})$$

$$= \det(\mathbf{C}(\vec{\mathbf{x}} - \vec{\mathbf{x}}')^*\mathbf{C}(\vec{\mathbf{x}} - \vec{\mathbf{x}}'))$$

$$\ldots\ldots(10)$$

$\mathbf{C}(\vec{\mathbf{x}})$ is transmitted at a duty cycle of 2/N for a signal transmitted through each transmit antenna. While this transmission scheme requires the channel fading condition that the channel status is unchanged only for two successive symbol period, it leads to signal interruption from each transmit antenna. The signal interruption may cause problems in actual system implementation. However, this can be overcome by selecting the two unitary matrices U and V such that all entries of $\mathbf{C}(\vec{\mathbf{x}})'$ are non-zeroes. For example, when four transmit antennas are given, the orthogonal space-time block coders 43 use Alamouti's code, and a 4x4 identity matrices and a 4x4 Hadamard matrix are used as U and V, respectively, as shown in Equation (11).

$$
\mathbf{C(\bar{x})}' = \begin{bmatrix} r_1 & r_3 & 0 & 0 \\ -r_3^* & r_1^* & 0 & 0 \\ 0 & 0 & r_2 & r_4 \\ 0 & 0 & -r_4^* & r_2^* \end{bmatrix} \begin{bmatrix} 1 & 1 & 1 & 1 \\ 1 & -1 & 1 & -1 \\ 1 & 1 & -1 & -1 \\ 1 & -1 & -1 & 1 \end{bmatrix}
$$

$$
= \begin{bmatrix} r_1+r_3 & r_1-r_3 & r_1+r_3 & r_1-r_3 \\ r_1^*-r_3^* & -r_1^*-r_3^* & r_1^*-r_3^* & -r_1^*-r_3^* \\ r_2+r_4 & r_2-r_4 & -r_2-r_4 & -r_2+r_4 \\ r_2^*-r_4^* & -r_2^*-r_4^* & -r_2^*+r_4^* & r_2^*+r_4^* \end{bmatrix}
$$

$$\ldots \ldots (11)$$

It is confirmed that the above new codeword matrix avoids signal interruption as compared to the codeword matrix of Equation (2).

Especially when N $(=2^n)$ transmit antennas are given, the orthogonal space-time block coders 43 use Alamouti's code, and the constellation-rotating matrix of Equation (7) is used, as shown in Equation (12),

$$
\mathbf{C(\bar{x})}' = \begin{bmatrix} \mathbf{I}_2 & \mathbf{I}_2 & \cdots & \mathbf{I}_2 \\ \mathbf{I}_2 & \theta & \cdots & \theta^{N-1} \\ \vdots & \vdots & \ddots & \vdots \\ \mathbf{I}_2 & \theta^{N-1} & \cdots & \theta^{(N-1)^2} \end{bmatrix}^* \begin{bmatrix} \mathbf{C}_{Ala}(r_1, r_{N/2+1}) & \mathbf{0}_2 & \cdots & \mathbf{0}_2 \\ \mathbf{0}_2 & \mathbf{C}_{Ala}(r_1, r_{N/2+2}) & \cdots & \mathbf{0}_2 \\ \vdots & \vdots & \ddots & \vdots \\ \mathbf{0}_2 & \mathbf{0}_2 & \cdots & \mathbf{C}_{Ala}(r_{N/2}, r_N) \end{bmatrix} \begin{bmatrix} \mathbf{I}_2 & \mathbf{I}_2 & \cdots & \mathbf{I}_2 \\ \mathbf{I}_2 & \theta & \cdots & \theta^{N-1} \\ \vdots & \vdots & \ddots & \vdots \\ \mathbf{I}_2 & \theta^{N-1} & \cdots & \theta^{(N-1)^2} \end{bmatrix}
$$

$$
= \begin{bmatrix} \mathbf{C}_{Ala}(s_1, s_{N/2+1}) & \mathbf{C}_{Ala}(s_{N/2}, s_N) & \cdots & \mathbf{C}_{Ala}(s_2, s_{N/2+2}) \\ \mathbf{C}_{Ala}(s_2, s_{N/2+2}) & \mathbf{C}_{Ala}(s_1, s_{N/2+1}) & \cdots & \mathbf{C}_{Ala}(s_3, s_{N/2+3}) \\ \vdots & \vdots & \ddots & \vdots \\ \mathbf{C}_{Ala}(s_{N/2}, s_N) & \mathbf{C}_{Ala}(s_{N/2-1}, s_{N-1}) & \cdots & \mathbf{C}_{Ala}(s_1, s_{N/2+1}) \end{bmatrix}
$$

$$\ldots \ldots (12)$$

where $\mathbf{I}_2$ is a unitary matrix, $\theta \overset{\Delta}{=} \begin{bmatrix} e^{j4\pi/N} & 0 \\ 0 & e^{-j4\pi/N} \end{bmatrix}$, $\mathbf{C}_{Ala}(a,b) \overset{\Delta}{=} \begin{bmatrix} a & b \\ -b^* & a^* \end{bmatrix}$, and $s_{lb} = e^{j(l-1)\pi/N} x_l$, $s_{N/2+l} = e^{j(l-1)\pi/N} x_{N/2+l}$, $l = 1, \cdots, N/2$.

It is also confirmed that the above new codeword matrix avoids signal interruption as compared to the codeword matrix of Equation (2). A symbol transmitted through each transmit antenna in the new codeword matrix can be represented by a symbol before constellation rotation or a symbol obtained by rotating the pre-constellation rotation symbol at a predetermined angle. Therefore, the transmission symbols of the new codeword matrix have a peak-to-average power ratio (PAPR) equal to that of QAM-modulated symbols before constellation rotation.

The proposed codeword matrix of Equation (2) is used in a wireless communication system having an even number of transmit antennas. For an odd number of transmit antennas, a new (N-1)xT codeword matrix is created by deleting the last column of the NxN codeword matrix of Equation (2). As a result, the (N-1)xT codeword matrix is transmitted through (N-1) transmit antennas for T symbol periods, as shown in Equation (13).

$$
\mathbf{C(\bar{x})}' \overset{\Delta}{=} [\vec{c}_1, \cdots, \vec{c}_{N-1}]
$$

$$\ldots \ldots (13)$$

For $(\vec{\mathbf{x}},\vec{\mathbf{x}'})$, $\det(\mathbf{S}(\vec{\mathbf{x}},\vec{\mathbf{x}'}))$ of the above codeword matrix is always greater than 0 because the property of the constellation-rotating matrix 0. Accordingly, the code has a maximum diversity order of N-1 for each receive antenna as shown in Equation (14).

$$\det(\mathbf{S}(\vec{\mathbf{x}},\vec{\mathbf{x}'})) = \left(\sum_{l=1}^{p}\left|r_{l,m} - r'_{l,m}\right|^2\right)^{n-1} \prod_{i=1}^{m-1}\left(\sum_{l=1}^{p}\left|r_{l,i} - r'_{l,i}\right|^2\right)^n > 0$$

$$\dots\dots(14)$$

The proposed codeword matrix of Equation (2) obtains a maximum diversity order by transmitting the orthogonal space-time block coded m (=axb, a, b≥1) matrices $\mathbf{A}_i(\vec{\mathbf{u}_i})$ through N (an even number) transmit antennas for T symbol periods. It can be further contemplated as another embodiment that the m codeword matrices $\mathbf{A}_i(\vec{\mathbf{u}_i})$ are grouped into b codeword matrix groups each having a codeword matrices, the b codeword matrix groups are transmitted after interleaving or using different sub-carriers, and a codeword matrices in each codeword matrix group are transmitted through $n$ x $a(\leq N)$ transmit antennas for $T_0 \times a(\leq T)$ symbol periods in the manner represented by Equation (2) or Equation (8).

As indicated above, the proposed transmission codeword matrix of Equation (2) is transmitted at a duty cycle of 2/N for a signal through each transmit antenna. Therefore, no signal transmission occurs for (N-2) symbol periods among N symbol periods. Accordingly, other $T_0 \times n$ codeword matrices $\mathbf{B}_i(\cdot)$, $\mathbf{C}_i(\cdot)$, and $\mathbf{D}_i(\cdot)$ ($i=1,\cdots,m$) generated independently of $\mathbf{A}_i(\cdot)$ for the non-transmission symbol periods are transmitted simultaneously in the following manner, to thereby increase the amount of data transmitted, as shown in Equation (15).

$$\begin{bmatrix} \mathbf{A}_1(\cdot) & \mathbf{B}_1(\cdot) & \cdots & \mathbf{C}_1(\cdot) & \mathbf{D}_1(\cdot) & \cdots & \mathbf{0}_m & \mathbf{0}_m \\ \mathbf{0}_m & \mathbf{A}_2(\cdot) & \mathbf{B}_2(\cdot) & \cdots & \mathbf{C}_2(\cdot) & \mathbf{D}_2(\cdot) & \cdots & \mathbf{0}_m \\ \vdots & \vdots & \ddots & \ddots & \ddots & \ddots & \ddots & \vdots \\ \mathbf{0}_m & \mathbf{0}_m & \cdots & \mathbf{A}_m(\cdot) & \mathbf{B}_m(\cdot) & \cdots & \mathbf{C}_m(\cdot) & \mathbf{D}_m(\cdot) \end{bmatrix}^T$$

$$\begin{bmatrix} \mathbf{A}_1(\cdot) & \mathbf{B}_1(\cdot) & \cdots & \mathbf{C}_1(\cdot) & \mathbf{D}_1(\cdot) \\ \mathbf{D}_2(\cdot) & \mathbf{A}_2(\cdot) & \mathbf{B}_2(\cdot) & \cdots & \mathbf{C}_2(\cdot) \\ \ddots & \ddots & \ddots & \ddots & \ddots \\ \cdots & \mathbf{C}_m(\cdot) & \mathbf{D}_m(\cdot) & \mathbf{A}_m(\cdot) & \mathbf{B}_m(\cdot) \end{bmatrix}^T ,$$

$$\begin{bmatrix} \mathbf{A}_1(\cdot) & \mathbf{B}_1(\cdot) & \cdots & \mathbf{C}_1(\cdot) & \mathbf{D}_1(\cdot) & \cdots \\ \mathbf{A}_2(\cdot) & \mathbf{B}_2(\cdot) & \cdots & \mathbf{C}_2(\cdot) & \mathbf{D}_2(\cdot) & \cdots \\ \vdots & \vdots & \cdots & \vdots & \vdots & \cdots \\ \mathbf{A}_m(\cdot) & \mathbf{B}_m(\cdot) & \cdots & \mathbf{C}_m(\cdot) & \mathbf{D}_m(\cdot) & \cdots \end{bmatrix}^T$$

$$\begin{bmatrix} \mathbf{A}_1(\cdot) & \mathbf{A}_2(\cdot) & \cdots & \mathbf{A}_m(\cdot) \\ \mathbf{B}_1(\cdot) & \mathbf{B}_2(\cdot) & \cdots & \mathbf{B}_m(\cdot) \\ \vdots & \vdots & \vdots & \vdots \\ \mathbf{C}_1(\cdot) & \mathbf{C}_2(\cdot) & \cdots & \mathbf{C}_m(\cdot) \\ \mathbf{D}_1(\cdot) & \mathbf{D}_2(\cdot) & \cdots & \mathbf{D}_m(\cdot) \end{bmatrix}^T$$

$$\dots\dots(15)$$

The coding apparatus of the present invention is configured to have a constellation-rotating precoder and an orthogonal space-time block coder, which are serially concatenated. Therefore, a maximum diversity gain can be achieved even when QAM is utilized as a modulation scheme and at least two transmit antennas are used.

Also, the coding technique of the present invention offers a maximum coding gain by use of Alamouti's code as an orthogonal space-time block code.

The coding technique of the present invention performs constellation-rotating precoding and orthogonal space-time block coding on a transmission signal. As a result, a maximum diversity gain is achieved and ML decoding is possible.

While the present invention has been shown and described with reference to certain preferred embodiments thereof, it will be understood by those skilled in the art that various changes in form and details may be made therein without departing from the scope of the present invention as defined by the appended claims.

**Claims**

1. A transmitter for transmitting data through a plurality of transmit antennas in a wireless communication system including the transmitter and a receiver for receiving the data through a plurality of receive antennas, the transmitter **characterized by** comprising:

   a constellation-rotating precoder (20) comprising a first accumulation module (23) for generating p $m^{th}$-order sub-input vectors $\vec{x}_i$, i = 1, ..., p, each having m symbols, by grouping the symbols of an $L^{th}$-order input vector $\vec{x}$ having L symbols modulated in at least one modulation scheme, and outputting the p $m^{th}$-order sub-input vectors $\vec{x}_i$ in parallel, and a plurality of constellation rotators (25) for generating p $m^{th}$-order sub-rotated vectors $\vec{r}_i$ by multiplying the p $m^{th}$-order sub-input vectors $\vec{x}_i$ by a constellation-rotating matrix $\Theta$;

   an accumulator (30) comprising a plurality of extraction modules (33) for extracting signals $r_{i,j}$ included in each of the p $m^{th}$-order sub-rotated vectors $\vec{r}_i$, received from the constellation-rotating precoder (20), and a second accumulation module (35) for generating m $p^{th}$-order sub-vectors $\vec{u}_i$, i = 1, ..., p, by grouping the extracted signals $r_{i,j}$; and

   a space-time block coder (40) for generating m $T_0$ x n codeword matrices $\mathbf{A}_i(\vec{u}_i)$ by performing space-time block coding on each of the m $p^{th}$-order sub-vectors $\vec{u}_i$, and transmitting the n columns of each codeword matrix $\mathbf{A}_i(\vec{u}_i)$ through n different transmit antennas in the same $T_0$ symbol periods while transmitting the columns of different codeword matrices $\mathbf{A}_i(\vec{u}_i)$ through different transmit antennas and in different symbol periods, where m is an integer larger than or equal to 1(m≥1), and n is an integer larger than or equal to 2 (n≥2).

2. The transmitter of claim 1, wherein the space-time block coder comprises:

   a plurality of orthogonal space-time coder modules (43) for generating the codeword matrices $\mathbf{A}_i(\vec{u}_i)$ by performing orthogonal space-time block coding on the m $p^{th}$-order sub-vectors $\vec{u}_i$ received from the second accumulation module; and

   a mapper (46) for mapping the codeword matrices $\mathbf{A}_i(\vec{u}_i)$ to the plurality of the transmit antennas.

3. The transmitter of claim 1, wherein the space-time block coder comprises:

   a plurality of orthogonal space-time coder modules (43) for generating the codeword matrices $\mathbf{A}_i(\vec{u}_i)$ by performing orthogonal space-time block coding on the m $p^{th}$-order sub-vectors $\vec{u}_i$ received from the accumulator; and

   a mapper (46) for mapping the codeword matrices $\mathbf{A}_i(\vec{u}_i)$ to the plurality of the transmit antennas.

4. The transmitter of claim 3, wherein the mapper maps a total of n columns of each of the codeword matrices $\mathbf{A}_i(\vec{u}_i)$ to different transmit antennas for the same symbol period and columns in different codeword matrices $\mathbf{A}_i(\vec{u}_i)$ to different transmit antennas for different symbol periods.

5. The transmitter of claim 1, wherein a TxN codeword matrix $\mathbf{C}(\vec{x}) = \{c_{ti}\}$ having the codeword matrices $\mathbf{A}_i(\vec{u}_i)$ as entries is formed as:

$$\mathbf{C}(\vec{\mathbf{x}}) \overset{\Delta}{=} [\vec{\mathbf{c}}_1, \cdots, \vec{\mathbf{c}}_N]$$

$$= \begin{bmatrix} \mathbf{A}_1(\vec{\mathbf{u}}_1) & \mathbf{0}_{n \times T_0} & \cdots & \mathbf{0}_{n \times T_0} \\ \mathbf{0}_{n \times T_0} & \mathbf{A}_2(\vec{\mathbf{u}}_2) & \cdots & \mathbf{0}_{n \times T_0} \\ \vdots & \vdots & \ddots & \vdots \\ \mathbf{0}_{n \times T_0} & \mathbf{0}_{n \times T_0} & \cdots & \mathbf{A}_m(\vec{\mathbf{u}}_m) \end{bmatrix}$$

where $\mathbf{0}_{n \times T_0}$ denotes *an n x $T_0$ zero matrix* and $\vec{\mathbf{c}}_i$ denotes an $i^{th}$ column of $\mathbf{C}(\vec{\mathbf{x}})$.

**6.** The transmitter of claim 1, wherein the space-time block coder groups a total of m codeword matrices $\mathbf{A}_i(\vec{\mathbf{u}}_i)$, where m=axb, a, and b≥1, into b codeword matrix groups, each having a codeword matrix, transmits the b codeword matrix groups after one of interleaving and using different sub-carriers, and transmits a codeword matrix in each codeword matrix group through $n \times a (\le N)$ transmit antennas for $T_0 \times a (\le T)$ symbol periods.

**7.** A coding method for a wireless communication system including a transmitter for transmitting data through a plurality of transmit antennas and a receiver for receiving the data through a plurality of receive antennas, the coding method **characterized by** comprising:

(a) generating p $m^{th}$-order sub-input vectors $\vec{\mathbf{x}}_i$, i = 1, ..., p, each having m symbols, by grouping the symbols of an $L^{th}$-order input vector $\vec{\mathbf{x}}$ having L input symbols modulated in at least one modulation scheme, and outputting the p $m^{th}$-order sub-input vectors $\vec{\mathbf{r}}_i$ in parallel;
(b) generating p $m^{th}$-order sub-rotated vectors $\vec{\mathbf{r}}_i$ by multiplying the p $m^{th}$-order sub-input vectors $\vec{\mathbf{x}}_i$ by a constellation-rotating matrix $\Theta$;
(c) extracting signals $r_{i,j}$ included in each of the p $m^{th}$-order sub-rotated vectors $\vec{\mathbf{r}}_i$ received from the constellation-rotating precoder (20) and generating m $p^{th}$-order sub-vectors $\vec{\mathbf{u}}_i$, i = 1, ..., p, by grouping the extracted signals $r_{i,j}$;
(d) generating m $T_0$ x n codeword matrices $\mathbf{A}_i(\vec{\mathbf{u}}_i)$ by performing space-time block coding on each of the m $p^{th}$-order sub-vectors $\vec{\mathbf{u}}_i$;
(e) transmitting the n columns of each codeword matrix $\mathbf{A}_i(\vec{\mathbf{u}}_i)$ through n different transmit antennas in the same $T_0$ symbol periods; and
(f) transmitting the columns of different codeword matrices $\mathbf{A}_i(\vec{\mathbf{u}}_i)$ through different transmit antennas and in different symbol periods, where m is an integer larger than or equal to 1(m≥1), and n is an integer larger than or equal to 2 (n≥2).

**8.** The coding method of claim 7, wherein the step of (c) comprises the steps of:

generating the codeword matrices $\mathbf{A}_i(\vec{\mathbf{u}}_i)$ by performing orthogonal space-time block coding on the m $p^{th}$-order sub-vectors $\vec{\mathbf{u}}_i$; and
mapping the codeword matrices $\mathbf{A}_i(\vec{\mathbf{u}}_i)$ to the plurality of the transmit antennas.

**9.** The coding method of claim 7, wherein the step (c) comprises the steps of:

generating the codeword matrices $\mathbf{A}_i(\vec{\mathbf{u}}_i)$ by performing orthogonal space-time block coding on the m $p^{th}$-order sub-vectors $\vec{\mathbf{u}}_i$; and
mapping the codeword matrices $\mathbf{A}_i(\vec{\mathbf{u}}_i)$ to the plurality of the transmit antennas.

**10.** The coding method of claim 7, wherein the step (c) comprises the step of generating a TxN codeword matrix $\mathbf{C}(\vec{\mathbf{x}})$ using the codeword matrices $\mathbf{A}_i(\vec{\mathbf{u}}_i)$, to be transmitted for N transmit antennas for T symbol periods.

**11.** The coding method of claim 10, wherein the TxN codeword matrix $\mathbf{C}(\vec{\mathbf{x}})$ is formed as:

$$\mathbf{C}(\vec{\mathbf{x}}) = [\vec{\mathbf{c}}_1, \cdots, \vec{\mathbf{c}}_N]$$

$$= \begin{bmatrix} \mathbf{A}_1(\vec{\mathbf{u}}_1) & \mathbf{0}_{n \times T_0} & \cdots & \mathbf{0}_{n \times T_0} \\ \mathbf{0}_{n \times T_0} & \mathbf{A}_2(\vec{\mathbf{u}}_2) & \cdots & \mathbf{0}_{n \times T_0} \\ \vdots & \vdots & \ddots & \vdots \\ \mathbf{0}_{n \times T_0} & \mathbf{0}_{n \times T_0} & \cdots & \mathbf{A}_m(\vec{\mathbf{u}}_m) \end{bmatrix}$$

where $\mathbf{0}_{n \times T_0}$ denotes an $n \times T_0$ zero matrix and $\vec{\mathbf{c}}_i$ denotes an $i^{\text{th}}$ column of $\mathbf{C}(\vec{\mathbf{x}})$.

**12.** The coding method of claim 10, wherein the step (c) comprises the steps of:

grouping a total of m codeword matrices $\mathbf{A}_i(\vec{\mathbf{u}}_i)$, where m=axb, a, and b≥1, into b codeword matrix groups each having a codeword matrix;
transmitting the b codeword matrix groups after interleaving or using different sub-carriers; and
transmitting a codeword matrices in each codeword matrix group through $n \times a(\leq N)$ transmit antennas for $T_0 \times a(\leq T)$ symbol periods.

**Patentansprüche**

**1.** Sender zum Senden von Daten über mehrere Sendeantennen in einem Drahtloskommunikationssystem, das den Sender und einen Empfänger zum Empfang der Daten über mehrere Empfangsantennen umfasst, wobei der Sender **dadurch gekennzeichnet ist, dass** er umfasst:

einen konstellationsdrehenden Vorcodierer (20) mit einem ersten Akkumulationsmodul (23) zur Erzeugung von p Sub-Eingangsvektoren m-ter Ordnung $\vec{x}_i$, i = 1, ..., p, wovon jeder m Symbole hat, durch Gruppierung der Symbole eines Eingangsvektors L-ter Ordnung $\vec{x}$ mit L Symbolen, die in mindestens einem Modulationsschema moduliert sind, und zum parallelen Ausgeben der p Sub-Eingangsvektoren m-ter Ordnung $\vec{x}_i$, und mehrere Konstellationsrotatoren (25) zur Erzeugung p sub-rotierter Vektoren m-ter Ordnung $\vec{r}_i$ durch Multiplizieren der p Sub-Eingangsvektoren m-ter Ordnung $\vec{x}_i$ mit einer Konstellationsdrehmatrix Θ;
einen Akkumulator (30) mit mehreren Extraktionsmodulen (33) zur Extrahierung von Signalen $r_{i,j}$, die in jedem der p sub-rotierten Vektoren m-ter Ordnung $\vec{r}_i$ enthalten sind, die aus dem konstellationsdrehenden Vorcodierer (20) empfangen werden, und mit einem zweiten Akkumulationsmodul (35) zur Erzeugung von m-Subvektoren p-ter Ordnung $\vec{u}_i$, i = 1, ..., p, durch Drehen der extrahierten Signale $r_{i,j}$; und
einen Raum-Zeit-Blockcodierer (40) zur Erzeugung von m $T_0$ x n-Codewort-Matrizen $A_i(\vec{u}_i)$ durch Ausführung einer Raum-Zeit-Blockcodierung an jedem der m Sub-Vektoren p-ter Ordnung $\vec{u}_i$, und zum Senden der n Spalten jeder Codewort-Matrix $A_i(\vec{u}_i)$ über n unterschiedliche Sendeantennen in den gleichen $T_0$ Symbolperioden, während die Spalten aus unterschiedlichen Codewort-Matrizen $A_i(\vec{u}_i)$ über unterschiedliche Sendeantennen und in unterschiedlichen Symbolperioden gesendet werden, wobei m eine Ganzzahl ist, die gleich oder größer ist als 1 (m ≥ 1), und n eine Ganzzahl ist, die gleich oder größer ist als 2 (n ≥ 2).

**2.** Sender nach Anspruch 1, wobei der Akkumulator umfasst:

mehrere orthogonale Raum-Zeit-Codiermodule (43) zur Erzeugung der Codewort-Matrizen $A_i(\vec{u}_i)$ durch Ausführen einer orthogonalen Raum-Zeit-Blockcodierung an den n Sub-Vektoren p-ter Ordnung $\vec{u}_i$, die aus dem zweiten Akkumulationsmodul empfangen werden; und
eine Zuordnungseinheit (46) zur Zuordnung der Codewort-Matrizen $A_i(\vec{u}_i)$ zu den mehreren Sendeantennen.

3. Sender nach Anspruch 1, wobei der Raum-Zeit-Blockcodierer umfasst:

mehrere orthogonale Raum-Zeit-Codiermodule (43) zur Erzeugung der Codewort-Matrizen $A_i(\vec{u}_i)$ durch Ausführen einer orthogonalen Raum-Zeit-Blockcodierung an den m Sub-Vektoren p-ter Ordnung $\vec{u}_i$, die aus dem Akkumulator empfangen werden, und

eine Zuordnungseinheit (46) zur Zuordnung der Codewort-Matrizen $A_i(\vec{u}_i)$ zu den mehreren Sendeantennen.

4. Sender nach Anspruch 3, wobei die Zuordnungseinheit insgesamt n Spalten jeder der Codewort-Matrizen $A_i(\vec{u}_i)$ unterschiedlichen Sendeantennen für die gleiche Symbolperiode und Spalten in unterschiedlichen Codewort-Matrizen $A_i(\vec{u}_i)$ zu unterschiedlichen Sendeantennen für unterschiedliche Symbolperioden zuordnet.

5. Sender nach Anspruch 1, wobei eine T x N-Codewort-Matrix $C(\vec{x}) = \{c_{ti}\}$, die die Codewort-Matrizen $A_i(\vec{u}_i)$ als Einträge hat, wie folgt gebildet ist:

$$\mathbf{C}(\vec{\mathbf{x}}) \overset{\Delta}{=} [\vec{\mathbf{c}}_1, \cdots, \vec{\mathbf{c}}_N]$$

$$= \begin{bmatrix} \mathbf{A}_1(\vec{\mathbf{u}}_1) & \mathbf{0}_{n \times T_0} & \cdots & \mathbf{0}_{n \times T_0} \\ \mathbf{0}_{n \times T_0} & \mathbf{A}_2(\vec{\mathbf{u}}_2) & \cdots & \mathbf{0}_{n \times T_0} \\ \vdots & \vdots & \ddots & \vdots \\ \mathbf{0}_{n \times T_0} & \mathbf{0}_{n \times T_0} & \cdots & \mathbf{A}_m(\vec{\mathbf{u}}_m) \end{bmatrix}$$

wobei $0_{n x T_0}$ eine n x $T_0$-Null-Matrix bezeichnet und $\vec{c}_i$ eine i-te Spalte von $C(\vec{x})$ bezeichnet.

6. Sender nach Anspruch 1, wobei der Raum-Zeit-Blockcodierer insgesamt m Codewort-Matrizen $A_i(\vec{u}_i)$, mit m = a x b, a und b ≥ 1, in b Codewort-Matrixgruppen einteilt, wovon jede eine Codewort-Matrix hat, die b Codewort-Matrixgruppen nach Verschachtelung oder Verwendung unterschiedlicher Subträger sendet, und eine Codewort-Matrix in jeder Codewort-Matrixgruppe über n x a(≤ N) Sendeantennen für $T_0$ x a(≤ T) Symbolperioden sendet.

7. Codierverfahren für ein Drahtloskommunikationssystem mit einem Sender zum Senden von Daten über mehrere Sendeantennen und einem Empfänger zum Empfang der Daten über mehrere Empfangsantennen, wobei das Codierungsverfahren **dadurch gekennzeichnet ist, dass** es umfasst:

(a) Erzeugen von p Sub-Eingangsvektoren m-ter Ordner $\vec{x}_i$, i = 1, ..., p, wovon jeder m Symbole hat, durch Gruppieren der Symbole eines Eingangsvektors L-ter Ordnung $\vec{x}$ mit L Eingangssymbolen, die in mindestens einem Modulationsschema moduliert sind, und durch paralleles Ausgeben der p Sub-Eingangsvektoren m-ter Ordnung $\vec{x}_i$;

(b) Erzeugen von p sub-rotierter Vektoren m-ter Ordnung $\vec{r}_i$ durch Multiplizieren der p Sub-Eingangsvektoren m-ter Ordnung $\vec{x}_i$ mit einer Konstellationsdrehmatrix $\Theta$;

(c) Extrahieren von Signalen $r_{i,j}$, die in jedem der p sub-rotierten Vektoren m-ter Ordnung $\vec{r}_i$ enthalten sind, die aus dem konstellationsdrehenden Vorcodierer (20) empfangen werden, und Erzeugen von m Sub-Vektoren p-ter Ordnung $\vec{u}_i$, mit i = 1, ..., p, durch Gruppieren der extrahierten Signale $r_{i,j}$;

(d) Erzeugen von m $T_0$ x n-Codewort-Matrizen $A_i(\vec{u}_i)$ durch Ausführen einer Raum-Zeit-Blockcodierung an jedem der m Sub-Vektoren p-ter Ordnung $\vec{u}_i$;

(e) Senden der n Spalten jeder Codewort-Matrix $A_i(\vec{u}_i)$ über n unterschiedliche Sendeantennen in den gleichen $T_0$ Symbolperioden; und

(f) Senden der n Spalten unterschiedlicher Codewort-Matrizen $A_i(\vec{u}_i)$ über unterschiedliche Sendeantennen und in unterschiedlichen Symbolperioden, wobei m eine Ganzzahl ist, die gleich oder größer ist als 1 (m ≥ 1), und n eine Ganzzahl ist, die gleich oder größer ist als 2 (n ≥ 2).

8. Codierungsverfahren nach Anspruch 7, wobei der Schritt (c) die Schritte umfasst:

Erzeugen der Codewort-Matrizen $A_i(\vec{u}_i)$ durch Ausführen einer orthogonalen Raum-Zeit-Blockcodierung an den m Sub-Vektoren p-ter Ordnung $\vec{u}_i$; und

Zuordnen der Codewort-Matrizen $A_i(\vec{u}_i)$ zu den mehreren Sendeantennen.

9. Codierungsverfahren nach Anspruch 7, wobei der Schritt (c) die Schritte umfasst:

Erzeugen der Codewort-Matrizen $A_i(\vec{u}_i)$ durch Ausführen einer orthogonalen Raum-Zeit-Blockcodierung an den m Sub-Vektoren p-ter Ordnung $\vec{u}_i$; und

Zuordnen der Codewort-Matrizen $A_i(\vec{u}_i)$ zu den mehreren Sendeantennen.

10. Codierungsverfahren nach Anspruch 7, wobei der Schritt (c) den Schritt umfasst: Erzeugen einer T x N-Codewort-Matrix $C(\vec{x})$ unter Anwendung der Codewort-Matrizen $A_i(\vec{u}_i)$, die für N Sendeantennen für T Symbolperioden zu senden sind.

11. Codierungsverfahren nach Anspruch 10, wobei die T x N-Codewort-Matrix $C(\vec{x})$ wie folgt gebildet wird:

$$\mathbf{C}(\mathbf{\vec{x}}) \overset{\Delta}{=} [\vec{\mathbf{c}}_1, \cdots, \vec{\mathbf{c}}_N]$$

$$= \begin{bmatrix} \mathbf{A}_1(\vec{\mathbf{u}}_1) & \mathbf{0}_{n \times T_0} & \cdots & \mathbf{0}_{n \times T_0} \\ \mathbf{0}_{n \times T_0} & \mathbf{A}_2(\vec{\mathbf{u}}_2) & \cdots & \mathbf{0}_{n \times T_0} \\ \vdots & \vdots & \ddots & \vdots \\ \mathbf{0}_{n \times T_0} & \mathbf{0}_{n \times T_0} & \cdots & \mathbf{A}_m(\vec{\mathbf{u}}_m) \end{bmatrix}$$

wobei $0_{n \times T_0}$ eine n x $T_0$-Null-Matrix und $\vec{c}_i$ eine i-te Spalte von $C(\vec{x})$ bezeichnet.

12. Codierungsverfahren nach Anspruch 10, wobei der Schritt (c) die Schritte umfasst:

Gruppieren von insgesamt m Codewort-Matrizen $A_i(\vec{u}_i)$, mit m = a x b, a, und b ≥ 1, in b Codewort-Matrixgruppen, die jeweils eine Codewort-Matrix enthalten;
Senden der b Codewort-Matrixgruppen nach Verschachtelung oder Verwendung unterschiedlicher Subträger; und
Senden einer Codewort-Matrix in jeder Codewort-Matrixgruppe über n x a(≤ N) Sendeantennen für $T_0$ x a(≤ T) Symbolperioden.

**Revendications**

1. Emetteur pour émettre des données à travers une pluralité d'antennes d'émission dans un système de communication sans fil comprenant l'émetteur et un récepteur pour recevoir les données à travers une pluralité d'antennes de réception, l'émetteur étant **caractérisé en ce qu'**il comprend:

un précodeur avec rotation de la constellation (20) comprenant un premier module d'accumulation (23) pour générer p vecteurs d'entrée secondaire $x_i$, i = 1, .... p, de rang m, chacun possédant m symboles, en regroupant les symboles d'un vecteur x d'entrée de rang L, possédant L symboles modulés dans au moins un schéma de modulation, et délivrer en sortie les p vecteurs d'entrée secondaire $x_i$ de rang m, en parallèle, et une pluralité de rotors de constellation (25) pour générer p vecteurs de rotation secondaire $r_i$ de rang m, en multipliant les p vecteurs d'entrée secondaire $x_i$ de rang p, par une matrice de rotation de constellation θ;
un accumulateur (30) comprenant une pluralité de modules d'extraction (33) pour extraire les signaux $r_{i,j}$ inclus dans chacun des p vecteurs de rotation secondaire $r_i$ de rang m, reçus du précodeur avec rotation de la constellation (20) et un second module d'accumulation (35) pour générer m vecteurs secondaires $u_i$ de rang p, i = 1, .... p, en regroupant les signaux extraits $r_{i,j}$; et

un codeur espace-temps par blocs (40) pour générer m matrices $A_i(u_i)$ de mots de code $T_0$ x n, en effectuant un codage espace-temps par blocs sur chacun des m vecteurs $u_i$ secondaires de rang p et en émettant les n colonnes de chaque matrice de mots de code $A_i(u_i)$ à travers n différentes antennes d'émission différentes dans les même p périodes de symbole $T_0$, en émettant les colonnes de différentes matrices de mots de code $A_i(u_i)$ à travers différentes antennes d'émission et dans différentes périodes de symboles, où m est un nombre entier supérieur ou égal à 1 (m>1) et n est un nombre entier supérieur ou égal à 2 (n$\geq$ 2).

2. Emetteur selon la revendication 1, dans lequel le codeur espace-temps par blocs comprend:

une pluralité de modules de codage espace-temps orthogonal par blocs (43) pour générer les matrices de mots de code $A_i(u_i)$ en réalisant un codage espace-temps orthogonal par blocs sur les m vecteurs secondaires $u_i$ de rang p, reçus du second module d'accumulation; et
un cartographe (46) pour cartographier les matrices de mots de code $A_i(u_i)$ pour la pluralité des antennes d'émission.

3. Emetteur selon la revendication 1, dans lequel le codeur espace-temps par blocs comprend:

une pluralité de modules de codage espace-temps orthogonal par blocs (43) pour générer les matrices de mots de code $A_i(u_i)$ en effectuant un codage espace-temps orthogonal par blocs sur les m vecteurs secondaires $u_i$ de rang p, reçus de l'accumulateur; et
un cartographe (46) pour cartographier les matrices de mots de code $A_i(u_i)$ pour la pluralité des antennes d'émission.

4. Emetteur selon la revendication 3, dans lequel le cartographe cartographie un total de n colonnes de chacune des matrices de mots de code $A_i(u_i)$ pour différentes antennes d'émission pour la même période de symbole et des colonnes dans différentes matrices de mots de code $A_i(u_i)$ pour différentes antennes d'émission pour différentes périodes de symbole.

5. Emetteur selon la revendication 1, dans lequel une matrice de mots de code TxN, C(x) = {c $_{ti}$} ayant les matrices

de mots de code $A_i(u_i)$ comme entrées, est formée comme suit:

$$\mathbf{C}(\vec{\mathbf{x}}) \overset{\Delta}{=} [\vec{\mathbf{c}}_1, \cdots, \vec{\mathbf{c}}_N] = \begin{bmatrix} \mathbf{A}_1(\vec{\mathbf{u}}_1) & \mathbf{0}_{n \times T_0} & \cdots & \mathbf{0}_{n \times T_0} \\ \mathbf{0}_{n \times T_0} & \mathbf{A}_2(\vec{\mathbf{u}}_2) & \cdots & \mathbf{0}_{n \times T_0} \\ \vdots & \vdots & \ddots & \vdots \\ \mathbf{0}_{n \times T_0} & \mathbf{0}_{n \times T_0} & \cdots & \mathbf{A}_m(\vec{\mathbf{u}}_m) \end{bmatrix}$$ où

$O_{nxTo}$ dénote une matrice nulle $nxT_o$ et $c_i$ dénote une i-ième colonne de C(x).

6. Emetteur selon la revendication 1, dans lequel le codeur espace-temps par blocs regroupe un total de m matrices de mots de code $A_i(u_i)$, où m = axb, a et b$\geq$1, en b groupes de matrices de mots de code, chacune ayant une matrice de mots de code, transmet les b groupes de matrices de mots de code après entrelacement et utilisation de sous-porteuses différentes, et transmet une matrice de mots de code dans chaque groupe de matrice de mots de code à travers $n$ x $a$ ($\leq$ N) antennes d'émission pour les périodes de symboles $T_0$ x $a$ ($\leq T$).

7. Procédé de codage pour système de communication sans fil incluant un émetteur pour émettre des données à travers une pluralité d'antennes d'émission et un récepteur pour recevoir les données à travers une pluralité d'antennes de réception, le procédé de codage **caractérisé en ce qu'**il comprend:

(a) la génération de p vecteurs d'entrée secondaire $x_i$ de rang m, i = 1, ..., chacun ayant m symboles, en groupant les symboles d'un vecteur d'entrée $x$ de rang L possédant L symboles d'entrée modulés dans au moins un schéma de modulation et délivrant en sortie les p vecteurs d'entrée secondaire $x_i$ de rang p, en parallèle;
(b) la génération de p vecteurs de rotation secondaire $r_i$ de rang p, en multipliant les p vecteurs d'entrée secondaire $x_i$ de rang m, par une matrice de rotation de la constellation $\theta$;
(c) l'extraction des signaux $r_{i,j}$ inclus dans chacun des p vecteurs de rotation secondaire $r_i$ de rang m, reçus du précodeur avec rotation de la constellation (20) et la génération de m vecteurs secondaires $u_i$ de rang m, i = 1, ..., p, en regroupant les signaux extraits $r_{i,j}$,

(d) la génération de m matrices de mots de code $A_i(u_i)$ en effectuant un codage espace-temps par blocs sur chacun des m vecteurs secondaires $u_i$ de rang p,

(e) l'émission des n colonnes de chaque matrice de mots de code $A_i(u_i)$ par différentes antennes d'émission dans les périodes de symbole $T_o$; et

(f) l'émission des colonnes de différentes matrices de mots de code $A_i(u_i)$ à travers différentes antennes d'émission et dans différentes périodes de symbole, où m est un nombre entier supérieur ou égal à 1 (m>1) et n est un nombre entier supérieur ou égal à 2 (n≥ 2).

8. Procédé de codage selon la revendication 7, dans lequel l'étape de (c) comprend les étapes consistant à:

générer les matrices de mots de code $A_i(u_i)$ en effectuant un codage espace-temps orthogonal par blocs sur chacun des m vecteurs secondaires $u_i$ de rang p; et

cartographier les matrices de mots de code $A_i(u_i)$ pour la pluralité des antennes d'émission.

9. Procédé de codage selon la revendication 7, dans lequel l'étape de (c) comprend les étapes consistant à:

générer les matrices de mots de code $A_i(u_i)$ en effectuant un codage espace-temps orthogonal par blocs sur chacun des m vecteurs secondaires $u_i$ de rang p; et

cartographier les matrices de mots de code $A_i(u_i)$ pour la pluralité des antennes d'émission.

10. Procédé de codage selon la revendication 7, dans lequel l'étape (c) comprend l'étape consistant à générer une matrice de mots de code C(x) TxN en utilisant les matrices de mots de code $A_i(u_i)$, à émettre pour N antennes d'émission pour des périodes de symbole T.

11. Procédé de codage selon la revendication 10, dans lequel la matrice de mots de code C(x) TxN est formée comme suit:

$$
\mathbf{C}(\vec{x}) = [\vec{c}_1, \cdots, \vec{c}_N]
= \begin{bmatrix}
\mathbf{A}_1(\vec{u}_1) & \mathbf{0}_{n \times T_0} & \cdots & \mathbf{0}_{n \times T_0} \\
\mathbf{0}_{n \times T_0} & \mathbf{A}_2(\vec{u}_2) & \cdots & \mathbf{0}_{n \times T_0} \\
\vdots & \vdots & \ddots & \vdots \\
\mathbf{0}_{n \times T_0} & \mathbf{0}_{n \times T_0} & \cdots & \mathbf{A}_m(\vec{u}_m)
\end{bmatrix}
$$

où $0_{nxT_o}$ dénote une matrice nulle $nxT_o$ et $c_i$ dénote une i-ième colonne de C(x).

12. Procédé de codage selon la revendication 10, dans lequel l'étape de (c) comprend les étapes consistant à:

regrouper un total de m matrices de mots de code $A_i(u_i)$, où m = axb, a et b≥1, dans b groupes de matrices de mots de code ayant chacun une matrice de mots de code;

émettre les b groupes de matrices de mots de code après entrelacement ou utilisation de sous-porteuses différentes; et

émettre a matrices de mots de code dans chaque groupe de matrice de mots de code à travers $n \times a$ (≤ N) antennes d'émission pour une période de symboles $T_o \times a$ (≤T).

EP 1 548 971 B1

FIG.1

FIG.2

FIG.3

$\vec{u}_1$ / $p\times$ → [Orthogonal S/T Block Coder] → $A_1(\vec{u}_1)$ / $n\times T_2$ → [Mapper] → $\vec{c}_1^T$ / $1\times T$

43

$\vec{u}_2$ / $p\times$ → [Orthogonal S/T Block Coder] → $A_2(\vec{u}_2)$ / $n\times T_2$ → [Mapper] → $\vec{c}_2^T$ / $1\times T$

43

$\vec{u}_m$ / $p\times$ → [Orthogonal S/T Block Coder] → $A_m(\vec{u}_m)$ / $n\times T_2$ → [Mapper] → $\vec{c}_N^T$ / $1\times T$

43

46

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Space-time-frequency block coded OFDM with subcarrier grouping and constellation precoding. **ZHI-QIANG LIU et al.** 2002 IEEE International Conference on Acoustics, Speech, and Signal Processing. IEEE, 13 May 2002, vol. 3, III - 2205-III - 2208

- Rate-one Space Frequency Block Codes with Maximum Diversity Gain for MIMO-OFDM. **LEI SHAO et al.** Globecom' 03, 2003, IEEE Global Telecommunications Conference. IEEE, 01 December 2003, vol. 2, 809-813